# EUROPÄISCHE PATENTSCHRIFT

(11) **EP 0 615 046 B1**
(45) Veröffentlichungstag und Bekanntmachung des Hinweises auf die Patenterteilung: **28.05.1997**
(21) Anmeldenummer: 94890013.9
(22) Anmeldetag: 19.01.1994
(51) Int. Cl.: E06B 3/66

(54) **Verfahren zum teilweisen Füllen von Hohlkörpern mit Granulat**
Method of partial filling of hollow bodies with granulates
Procédé pour le remplissage partiel de corps creux avec granulat

(30) Priorität: 12.03.1993 AT 489/93
(43) Veröffentlichungstag der Anmeldung: 14.09.1994
(73) Patentinhaber: Lisec, Peter, A-3363 Amstetten-Hausmening (AT)
(72) Erfinder: Lisec, Peter, A-3363 Amstetten-Hausmening (AT)
(74) Vertreter: Beer, Manfred, Dipl.-Ing.

(56) Entgegenhaltungen:
- EP-A- 0 349 519
- DE-C- 3 942 808
- US-A- 4 670 954
- US-A- 4 912 837
- US-A- 5 134 279

## Beschreibung

Die Erfindung betrifft ein Verfahren zum teilweisen Füllen von Hohlkörpern mit Granulat und eine Vorrichtung zum Durchführen dieses Verfahrens.

Insbesondere beim Füllen von Abstandhalterrahmen für Isolierglasscheiben, die ein- oder mehrstückig aus Hohlprofilleisten bestehen, mit granulatförmigem Trockenmittel (Molekularsieb) stellt sich häufig das Problem, daß die den Abstandhalter bildende(n) Hohlprofilleiste(n) nicht bis zu ihrem Ende gefüllt werden darf, um das Verbinden der Hohlprofilleiste, beispielsweise durch Einstecken von Geradverbindern oder Eckverbindern zu ermöglichen.

Aus der US-A-4 912 837 ist es bekannt, an drei Ecken gebogene Abstandhalterrahmen über die zur offenen Ecke hin führenden Rahmenschenkel durch deren offene Enden mit Trockenmittel zu füllen. In der US-A-4 912 837 ist der Vorschlag enthalten, das Trockenmittel in dem längeren, noch abzubiegenden Rahmenschenkel (zur Bildung der vierten Ecke) dosiert nur so weit einzufüllen, daß das Granulat die Biegestelle, an der die vierte Ecke gebogen werden soll, nicht erreicht. Wie dies ausgeführt werden soll, ist in der US-A-4 912 837 im einzelnen nicht angegeben.

Es ist auch schon vorgeschlagen worden (siehe DE-C-3 942 808) eine Hohlprofilleiste zur Gänze mit Granulat zu füllen und dann Granulat aus der Hohlpropfilleiste wieder so weit herauszublasen und abzusaugen, daß die gewünschte Füllhöhe erreicht wird. Dieses Herausblasen hat sich als nachteilig erwiesen, ist nur schwer zu steuern und stellt überdies einen zusätzlichen Arbeitsschritt dar, der die Taktzeit, beispielsweise beim Herstellen von Abstandhalterrahmen für Isolierglasscheiben nachteilig beeinflußt.

Aus der US-A-4 660 271 ist es auch bekannt, eine Hohlprofilleiste, die mit Trockenmittel gefüllt ist, im Biegebereich anzubohren und durch die Bohrlöcher Trockenmittel in dem Ausmaß herauszusaugen, daß das nachfolgende Biegen der Ecke von Trockenmittel nicht behindert wird.

Der Erfindung liegt die Aufgabe zugrunde, ein Verfahren der eingangs genannten Gattung anzugeben, mit dem Hohlkörper, insbesondere Hohlprofilleisten für Abstandhalterrahmen für Isolierglasscheiben, ohne weiteres nur bis zur gewünschten Füllhöhe, d.h. teilweise gefüllt werden können.

Gemäß der Erfindung wird diese Aufgabe dadurch gelöst, daß eine an einen Vorratsbehälter für Granulat angeschlosssene Sonde in den Hohlkörper soweit eingeschoben wird, daß ihr vorderes Ende an der Stelle in dem Hohlkörper angeordnet ist, bis zu der letzterer mit Granulat gefüllt werden soll, daß das Zuführen von Granulat abgebrochen wird, sobald der Hohlkörper bis zum vorderen Ende der Sonde mit Granulat gefüllt worden ist, und daß die Sonde hierauf aus dem Hohlkörper herausgezogen wird.

Bevorzugte Ausführungsformen des erfindungsgemäßen Verfahrens sind Gegenstand der Unteransprüche 2 bis 4.

Ganz besonders bevorzugt ist die Anwendung des erfindungsgemäßen Verfahrens auf das Füllen von drei Ecken aufweisenden Abstandhalterrahmen, die aus wenigstens einer Hohlprofilleiste bestehen, deren vierte Ecke noch offen ist, wobei die vierte Ecke dadurch gebildet werden kann, daß einer der beiden zur offenen Ecke führenden Rahmenschenkel länger ausgebildet ist als der andere und abgebogen wird, wobei das freie Ende dann neben dem freien Ende des kürzeren Rahmenschenkels zu liegen kommt.

Die Erfindung ist auch für Abstandhalterrahmen vorteilhaft, bei welchen wenigstens eine, z.B. die vierte Ecke durch Einstecken eines Eckwinkels geschlossen wird.

In beiden Fällen darf die Hohlprofilleiste nicht zur Gänze mit Trockenmittel gefüllt sein. Der längere Schenkel darf nur bis unterhalb des Biegebereiches gefüllt sein, um den Biegevorgang nicht nachteilig zu beeinflussen (Gefahr, daß das Hohlprofil platzt, oder Trockenmittel zu Pulver zerdrückt wird). Auch wenn die vierte Ecke mit Hilfe eines Eckwinkels geschlossen wird, dürfen beide Schenkel nicht zur Gänze gefüllt sein, damit der Eckwinkel eingesteckt werden kann.

Auch der kürzere Rahmenschenkel darf, wenn die letzte Ecke, z.B. die vierte Ecke eines Abstandhalterrahmens durch Abbiegen des längeren Rahmenschenkels gebildet wird, nicht zur Gänze gefüllt sein, wenn das Schließen des Rahmens unter Verwendung eines in die offenen Enden eingesteckten Geradverbinders, wie dies an sich aus der US-A-4 912 837 bekannt ist, oder durch Stumpfschweißen (siehe US-A-4 704 512) ausgeführt wird.

Wird das erfindungsgemäße Verfahren zum Füllen eines aus wenigstens einer Hohlprofilleiste gebildeten Abstandhalterrahmens für Isolierglasscheiben mit granulatförmigem Trockenmittel angewendet, wobei der Abstandhalterrahmen mehrere, z.B. drei, vorzugsweise durch Biegen gebildete Ecken aufweist und an der letzten zu bildenden Ecke, z.B. der vierten Ecke offengelassen wird, wobei granulatförmiges Trockenmittel über die offenen Enden von einem oder beiden zu dieser offenen Stelle führenden Rahmenschenkel eingefüllt und dann der Rahmen endgültig geschlossen wird, wobei vorzugsweise der eine Rahmenschenkel länger ist als der andere und der verlängerte Rahmenschenkel bis unterhalb seiner Biegestelle und/oder der verkürzte Rahmenschenkel teilweise gefüllt werden, dann wird bevorzugt so vorgegangen, daß das Verfahren nach einem oder mehreren der Ansprüche 1 bis 4 angewendet wird, und daß der Rahmen nach dem Füllvorgang nach dem Umbiegen des längeren Rahmenschenkels an der Biegestelle durch einen Geradverbinder oder durch Verschweißen der offenen Enden geschlossen wird.

Die Erfindung erstreckt sich weiters auf eine Verfahrensvariante, bei der die Bewegung von Granulat in der Sonde überwacht wird und der Füllvorgang abgebrochen wird, sobald die Bewegung von Granulat in der Sonde aufhört. Diese Variante des Verfahrens der Erfindung kann noch weitergebildet werden, indem die Bewegung von Granulat durch einen der Leitung oder der Sonde zugeordneten Bewegungssensor überwacht wird.

Bevorzugt beim erfindungsgemäßen Verfahren ist es, wenn das Ausströmen von Granulat aus der Sonde beim Herausziehen derselben aus dem Hohlkörper unterbunden wird, indem an die Sonde im Abstand vom freien Ende derselben Unterdruck angelegt wird.

Eine zum Durchführen des erfindungsgemäßen Verfahrens besonders geeignete Vorrichtung mit einem Vorratsbehälter für Granulat und einer Halterung für den zu füllenden Hohlkörper kann erfindungsgemäß dadurch gekennzeichnet sein, daß wenigstens eine in den zu füllenden Hohlkörper einführbare Sonde vorgesehen ist, daß die Sonde über eine Leitung mit dem Vorratsbehälter für Granulat in Verbindung steht, daß der Leitung oder der Sonde ein Sensor zum Überwachen von Bewegungen des Granulats zugeordnet ist und daß an die Sonde im Abstand von ihrem freien Ende eine Leitung zum Anlegen von Unterdruck angeschlossen ist.

Bevorzugte Ausführungsformen dieser Vorrichtung sind Gegenstand der Ansprüche 7 bis 13.

Das erfindungsgemäße Verfahren und die erfindungsgemäße Vorrichtung gehen von der Erkenntnis aus, daß das Zuströmen von Granulat durch die Sonde in den Hohlkörper, der beispielsweise eine Hohlprofilleiste für Abstandhalterrahmen von Isolierglas ist, selbsttätig aufhört, wenn das eingefüllte Granulat das in den Hohlkörper eingeführte Ende der Sonde erreicht hat. Wenn die Bewegung von Granulat in der Sonde oder in einer ihr vorgeschalteten Leitung überwacht wird, kann das Aufhören von Bewegung von Granulat in der Sonde oder der Zuführleitung dazu herangezogen werden, ein Steuersignal zu erzeugen, das z.B. den Füllvorgang beendet.

Dadurch, daß in einer Ausführungsform der Erfindung vorgesehen ist, daß an die Sonde, während sie aus dem Hohlkörper herausgezogen und zum Einführen in den nächsten zu füllenden Hohlkörper bereitgehalten wird, Unterdruck angelegt wird, wird verhindert, daß in der Sonde enthaltenes Granulat aus dieser ausströmt und entweder verlorengeht oder den Hohlkörper weiter füllt als dies gewünscht ist. Das Anlegen von Unterdruck (es genügt ein ganz geringer Unterdruck) bewirkt nämlich, daß sich Granulat zwischen der Anschlußstelle der Unterdruckleitung und dem offenen Ende der Sonde pfropfenartig verkeilt, so daß kein oder praktisch kein Granulat aus der Sonde mehr ausströmen kann. Wird der Unterdruck wieder aufgehoben, dann hebt sich die Verkeilung auf, der Pfropfen zerfällt und Granulat kann wieder in einen Hohlkörper oder eine Hohlprofilleiste einströmen.

Das Ausmaß und die Tiefe, mit welcher die Sonde in einen Hohlkörper oder in eine Hohlprofilleiste eingeführt wird, kann auf verschiedene Weise eingestellt werden. Entweder wird der Vorschub der Sonde beim Einführen derselben in den Hohlkörper durch eine Wegmeßeinrichtung überwacht, oder es wird ein Anschlag vorgesehen, der die Einschubtiefe der Sonde in den Hohlkörper oder in die Hohlprofilleiste begrenzt. Dieser Anschlag kann ein Anschlag sein, der sich an das vordere freie Ende des Hohlkörpers oder der Hohlprofilleiste, die mit Granulat zu füllen ist, anlegt. Der Anschlag kann auch verstellbar sein, um die Einführtiefe, d.h. das Ausmaß, wie weit der Hohlkörper oder die Hohlprofilleiste mit Granulat gefüllt wird, auf das gewünschte Maß einzustellen.

Weitere Einzelheiten und Merkmale der Erfindung ergeben sich aus der nachstehenden Beschreibung der in der Zeichnung gezeigten Ausführungsbeispiele einer erfindungsgemäßen Vorrichtung, mit der das Verfahren der Erfindung ausgeführt werden kann. Es zeigt
Fig. 1 schematisch eine Vorrichtung zum Füllen von Abstandhalterrahmen für Isolierglasscheiben mit granulatförmigem kenmittel,
Fig. 2 im vergrößerten Maßstab eine Sonde und
Fig. 3 eine Ausführungsform mit zwei voneinander unabhängig bewegbaren Sonden.

Nach dem erfindungsgemäßen Verfahren und in der erfindungsgemäßen Vorrichtung können beispielsweise Abstandhalterrahmen mit granulatförmigem Trockenmittel gefüllt werden, die an drei Ecken gebogen sind und deren vierte Ecke noch offen ist. Solche Abstandhalterrahmen können beispielsweise in der aus der US-A-5 136 871 bekannten Biegevorrichtung hergestellt werden, wobei das in der US-A-5 136 871 beschriebene Umbiegen der vierten Ecke, um den Abstandhalter zu schließen, vorerst unterbleibt. Es steht dann der eine der beiden zur noch offenen Ecke führenden Schenkel 2 des Abstandhalterrahmens 1 über die noch herzustellende vierte Ecke um das Stück 5 über, um das der andere, zur noch herzustellenden Ecke führende Schenkel 3 des Abstandhalterrahmens 1 kürzer ist. Nach dem Abbiegen des überstehenden Stückes 5 an der Stelle 4, wo die Ecke zu erzeugen ist, ergibt sich ein geschlossener Abstandhalterrahmen, dessen Stoßstelle im Bereich des Schenkels 3 liegt. Die Enden der Schenkel 2 und 3 an der Stoßstelle werden durch einen Steckverbinder, durch Schweißen oder Löten miteinander verbunden.

Neben solchen, durch Biegen einer Hohlprofilleiste hergestellten Abstandhalterrahmen 1 können nach dem erfindungsgemäßen Verfahren oder in der erfindungsgemäßen Vorrichtung Hohlprofilleisten für Abstandhalterrahmen oder Abstandhalterrahmen gefüllt werden, deren Ecken alle oder nur zum Teil durch in die Hohlprofilleistenabschnitte eingesteckte Eckverbinder gebildet werden.

Die erfindungsgemäße Arbeitstechnik ist überall dort mit Vorteil anwendbar, wo vergleichsweise englumige Hohlkörper teilweise, d.h. bis zu einem gewünschten Ausmaß (Füllhöhe) mit granulatförmigem Werkstoff gefüllt werden sollen.

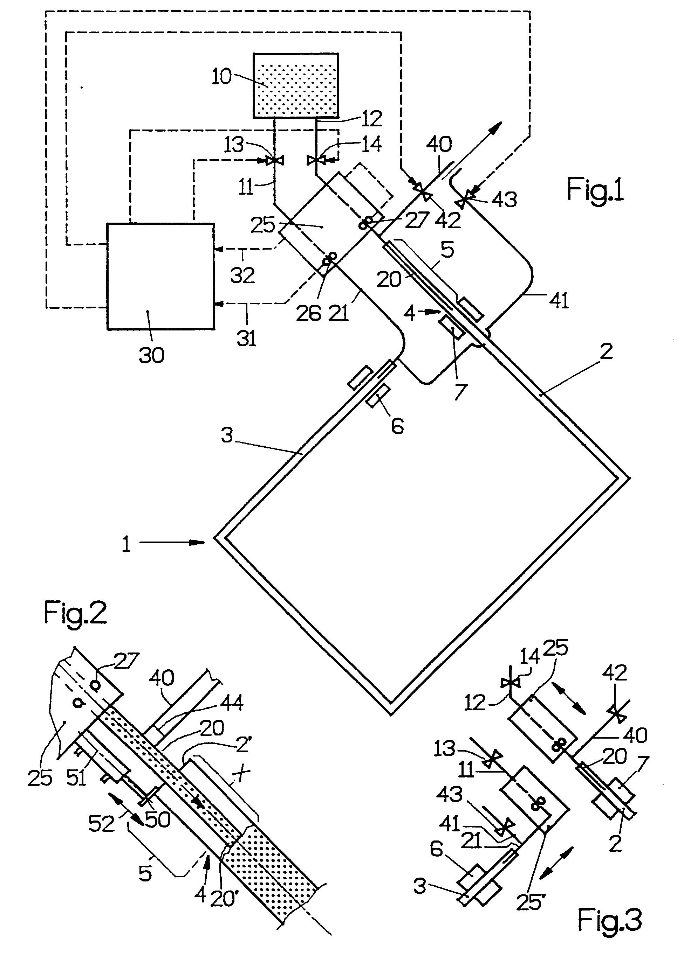

Die in Fig. 1 gezeigte Vorrichtung besteht aus einer beliebig ausgebildeten Halterung 6, 7 für den Abstandhalterrahmen 1, wobei die Halterungen 6,7 beispielsweise als Klemmen ausgebildet sind, welche die zur offenen Ecke führenden Schenkel 2 und 3 des Abstandhalterrahmens 1 erfassen.

Die erfindungsgemäße Vorrichtung besitzt weiters einen Vorratsbehälter 10 für granulatförmiges Trockenmittel, das in den Abstandhalterrahmen 1 einzufüllen ist. Das granulatförmige Trockenmittel wird über Leitungen 11, 12 von Absperrorganen 13, 14 geregelt, zu zwei Sonden 20 und 21 geführt, die mit ihren freien Enden in die Schenkel 2 und 3 des Abstandhalterrahmens 1 eingeführt werden, wenn der Abstandhalterrahmen 1 mit granulatförmigem Trockenmittel gefüllt werden soll.

Die Leitungen 11, 12, die zu den Sonden 20, 21 führen, gehen beispielsweise durch eine gemeinsame Halterung 25 für die Sonden 20 und 21. An oder in der Halterung sind zwei Sensoren 26 und 27 angeordnet, welche die Bewegung von granulatförmigem Trockenmittel in den Leitungen 11, 12 und somit durch die Sonden 20, 21 erfassen und ein Signal abgeben, wenn die Bewegung von granulatförmigem Trockenmittel aufhört. Beispiele für geeignete Sensoren sind in der US-A-4 670 954 oder in der USA-5 134 279 beschrieben.

Die Vorrichtung umfaßt weiters eine Steuerung 30, die u.a. über die Leitungen 31, 32 von den erwähnten Sensoren 26, 27 Signale empfängt und die ihrerseits die Absperrorgane 13, 14 in den Leitungen 11, 12 steuert.

Es ist noch darauf hinzuweisen, daß an die Leitungen 11, 12 oder an die Sonden 20, 21 (nicht gezeigte) Leitungen angeschlossen sein können, durch die ein das Strömen von granulatförmigem Trockenmittel durch die Leitungen 11, 12 und durch die Sonden 20, 21 in die Schenkel 2 und 3 des Abstandhalterrahmens 1 unterstützendes Gas, z.B. getrocknete Luft, eingeblasen werden kann.

An die Sonden 20 und/oder 21 sind Leitungen 40, 41 angeschlossen, die zu einer Unterdruckquelle führen. In den Leitungen 40, 41 sind Absperrorgane 42, 43 vorgesehen, deren Öffen- und Schließbewegungen ebenfalls von der Steuerung 30 aus gesteuert werden.

Fig. 2 zeigt im vergrößerten Maßstab noch einmal die Sonde 20. Fig. 2 zeigt auch, daß im Bereich der Mündung der Leitung 40, die zur Unterdruckquelle führt, an der Sonde 20 eine gas- bzw. luftdurchlässige, aber den Durchtritt von granulatförmigem Werkstoff verhindernde Platte 44, wie ein Sieb, od.dgl., vorgesehen ist. Die Platte 44 verhindert, daß beim Anlegen von Unterdruck an die Leitung 40, d.h. bei geöffnetem Absperrorgan 42 granulatförmiges Trockenmittel aus dem Inneren der Sonde 20 in die Leitung 40 gesaugt wird.

Fig. 2 zeigt auch, daß die Einschubtiefe X der Sonde 20 in den Schenkel 2 des Abstandhalterrahmens 1 durch einen Anschlag 50 bestimmt werden kann, der im gezeigten Ausführungsbeispiel durch einen Druckmittelmotor 51 verstellbar ist (Pfeil 52). Neben einem solchen Anschlag 50 zur Begrenzung der Einschubtiefe X der Sonde 20 in den Schenkel 2 können auch fixe Anschläge oder Meßeinrichtungen vorgesehen sein, die den Vorschub der Halterung 25 mit der Sonde 20 beim Einführen der Sonde 20 in den Schenkel 2 messen und nach dem Erreichen der gewünschten Einführtiefe X die Vorschubbewegung abbrechen.

Im Falle des Füllens von Schenkeln 2 von Abstandhalterrahmen 1, die zur Ausbildung der vierten Ecke an der Stelle 4 noch abzubiegen sind, wird die Sonde 20 in den Schenkel 2 so weit eingeschoben, daß ihr freies, vorderes Ende von dem offenen Ende 2' des Schenkels 2, durch das die Sonde 20 eingeschoben worden ist, einen Abstand X aufweist, der etwas größer ist als die Länge des Abschnittes 5 des Schenkels 2, der zur Bildung der Ecke an der Stelle 4 umzubiegen ist.

Fig. 3 zeigt noch eine Ausführungsform der erfindungsgemäßen Vorrichtung, bei der die beiden Sonden 20 und 21 an gesonderten Halterungen 25 und 25' vorgesehen sind. Diese Ausführungsform hat den Vorteil, daß die Sonden 20 und 21 voneinander unabhängig in die zur offenen Ecke führenden Schenkel 2 und 3 eines Abstandhalterrahmens 1 eingeführt werden können. Dies ist beispielsweise dann von Bedeutung, wenn auch der Schenkel 3 des Abstandhalterrahmens 1 nicht zur Gänze mit granulatförmigem Trockenmittel gefüllt werden soll, um den Stumpf-Schweißvorgang nicht zu behindern, oder um den Eingriff eines Geradverbinders zum endgültigen Schließen des Abstandhalterrahmens 1 nach dem Umbiegen des Abschnittes 5 des Rahmenschenkels 2 zu erlauben.

Nachstehend wird die Arbeitsweise beim Füllen eines Abstandhalterrahmens 1, der in seiner einen Ecke noch offen ist, beschrieben.

Der Abstandhalterrahmen 1 wird von Hand aus oder maschinell in die Vorrichtung eingesetzt und in dieser durch die Klemmen 6 und 7 festgehalten. Dabei ist der Abstandhalterrahmen 1 vorzugsweise so ausgerichtet, daß er im wesentlichen vertikal ausgerichtet ist, wobei die noch offene Ecke nach oben weist. Nun werden die Sonden 20 und 21 in die offenen Enden der zur offenen Ecke führenden Schenkel 2 und 3 so weit eingeführt, daß die vorderen Enden der Sonden 20 und 21 bis zu der Stelle in die Schenkel 2 und 3 ragen, bis zu der die Schenkel 2 und 3 mit granulatförmigem Trockenmittel zu füllen sind. Dies ist in Fig. 2 für die Sonde 20 gezeigt, wobei dort die Einführtiefe der Sonde 20 die Strecke X ist. Nachdem dies geschehen ist, wird über die Sonden 20, 21 gegebenenfalls unterstützt durch einen Luft- oder Gasstrom nach dem Öffnen der Ventile 13, 13, 14 granulatförmiges Trockenmittel aus dem Vorratsbehälter 10 in die Rahmenschenkel 2 und 3 eingefüllt.

Sobald im Schenkel 2 des Abstandhalterrahmens 1 der in Fig. 2 gezeigte Zustand erreicht worden ist, in dem das granulatförmige, in den Innenraum des Schenkels 2 eingebrachte Trockenmittel die Mündung 20' der Sonde 20 erreicht hat, also der Schenkel 2 des Abstandhalterrahmens 1 bis zur Mündung 20' der Sonde 20 mit granulatförmigem Trockenmittel gefüllt worden ist, hört die Bewegung von granulatförmigem Trockenmittel durch die Leitung 12 und durch die Sonde 20 auf. Dies wird vom Sensor 27 erfaßt, der über die Steuerung 30 das Absperrorgan 14 im Sinne einer Schließbewegung betätigt und das Absperrorgan 42 in der Unterdruckleitung 40 öffnet. Dadurch, daß über die Leitung 40 an den Innenraum der Sonde 20 Unterdruck angelegt wird, verkeilt sich granulatförmiges Trockenmittel im Inneren der Sonde 20 und bildet so einen Pfropfen, der verhindert, daß aus der in der Gebrauchslage schräg nach unten weisenden Sonde 20 weiter granulatförmiges Trockenmittel ausströmt.

Sinngemäße Vorgänge gelten für das Füllen des Schenkels 3 des Abstandhalterrahmens 1.

Nachdem beide Schenkel so im gewünschten Ausmaß (also bis zur gewünschten "Höhe") gefüllt worden sind, werden die Sonden 20 und 21 bei weiter an sie angelegtem Unterdruck aus den offenen Enden der Schenkel 2 und 3 des Abstandhalterrahmens 1 herausgezogen.

Der so mit granulatförmigem Trockenmittel gefüllte Abstandhalterrahmen 1 wird nun weiterbearbeitet, indem die vierte Ecke durch Umbiegen des Abschnittes 5 des Schenkels 2 gebildet wird (z.B. gleich in der Vorrichtung durch eine nicht gezeigte Biegevorrichtung, siehe US-A-4 912 837). Nun wird der Abstandhalterrahmen geschlossen, wobei die Verbindung der freien Enden der den Abstandhalterrahmen 1 bildenden Hohlpropfilleiste entweder durch einen Geradverbinder (siehe US-A-4 912 837), oder mit Hilfe einer Schweißvorrichtung (siehe US-A-4 704 512) in der Füllvorrichtung oder einer nachgeschalteten Vorrichtung ausgeführt werden kann.

Es ist erkennbar, daß mit der erfindungsgemäßen Vorrichtung Hohlkörper, beispielsweise Schenkel von Abstandhalterrahmen oder auch Hohlprofilleisten zum Herstellen von Abstandhalterrahmen ohne besonderen Aufwand genau bis zur gewünschten Füllhöhe mit granulatförmigem Werkstoff - im Falle von standhalterrahmen granulatförmiges Trockenmittel - gefüllt werden können.

Die erfindungsgemäße Verfahrensweise und die erfindungsgemäße Vorrichtung bieten gegenüber dem Einfüllen einer vorgegebenen Menge in den Abstandhalterrahmen oder dem zeitabhängigen Füllen um eine dosierte Füllung zu erreichen, die den Hohlkörper nur teilweise füllt, erhebliche Vorteile, da sie Fehler auf Grund von Verlusten an granulatförmigem Werkstoff oder Änderungen der Strömungsgeschwindigkeit des granulatförmigen Werkstoffes vermeidet und immer auf die tatsächliche Füllhöhe Rücksicht nimmt. Das erfindungsgemäße Verfahren vermeidet, daß beispielsweise Abstandhalterrahmen für Isolierglasscheiben zuviel oder zuwenig gefüllt werden. Beides ist nachteilig, da eine Überfüllung beim Biegen der vierten Ecke oder beim Verbinden der Enden durch einen Geradverbinder, durch Schweißen oder durch Löten Probleme bringt und eine Unterfüllung insoferne unerwünscht ist, als die Kapazität des in einen Abstandhalterrahmen eingefüllten Trockenmittels verringert ist, was die Folge haben kann, daß die wasserbindende Kapazität des Trockenmittels in der fertigen Isolierglasscheibe nicht hinreicht und sich diese innen beschlägt, also anläuft.

Das erfindungsgemäße Verfahren kann auch in einer entsprechend ausgerüsteten Vorrichtung zum Herstellen von Abstandhalterrahmen für Isolierglasscheiben durch mehrfaches Abbiegen von Hohlprofilleisten ausgeführt werden. Hiezu kann die beschriebene Vorrichtung der Erfindung einfach in eine Vorrichtung zum Herstellen von Abstandhalterrahmen durch Abbiegen von Hohlprofilleisten integriert werden.

Zusammenfassend kann die Erfindung beispielsweise wie folgt dargestellt werden:
Ein Abstandhalterrahmen, der aus einer dreimal abgebogenen Hohlprofilleiste besteht und an der vierten Ecke noch offen ist, wobei ein Schenkel 2 länger ist als der andere zur offenen Ecke führende Schenkel, wird über eine in den Schenkel 2 eingeführte Sonde 20 mit granulatförmigem Trockenmittel gefüllt. Die Sonde 20 ragt mit ihrem vorderen Ende 20' bis zur gewünschten Füllhöhe in den Schenkel 2. Sobald das Trockenmittel im Schenkel 2 die Sonde 20 erreicht, hört das Zuströmen von Trockenmittel auf. Dies erfaßt ein Sensor 27. Der Sensor 27 steuert das Herausziehen der Sonde 20 an. Dabei wird über eine Leitung 40 an die Sonde 20 Unterdruck angelegt, damit kein Trockenmittel mehr aus der Sonde 20 austritt.

## Patentansprüche

1. Verfahren zum teilweisen Füllen von Hohlkörpern mit Granulat, dadurch gekennzeichnet, daß eine an einen Vorratsbehälter für Granulat angeschlosssene Sonde in den Hohlkörper soweit eingeschoben wird, daß ihr vorderes Ende an der Stelle in dem Hohlkörper angeordnet ist, bis zu der letzterer mit Granulat gefüllt werden soll, daß das Zuführen von Granulat abgebrochen wird, sobald der Hohlkörper bis zum vorderen Ende der Sonde mit Granulat gefüllt worden ist, und daß die Sonde hierauf aus dem Hohlkörper herausgezogen wird.

2. Verfahren nach Anspruch 1, dadurch gekennzeichnet, daß die Bewegung von Granulat in der Sonde überwacht und der Füllvorgang abgebrochen wird, sobald die Bewegung von Granulat in der Sonde aufhört.

3. Verfahren nach Anspruch 2, dadurch gekennzeichnet, daß die Bewegung von Granulat durch einen Bewegungssensor überwacht wird.

4. Verfahren nach einem der Ansprüche 1 bis 3, dadurch gekennzeichnet, daß das Ausströmen von Granulat aus der Sonde beim Herausziehen derselben aus dem Hohlkörper unterbunden wird, indem an die Sonde im Abstand vom freien Ende derselben Unterdruck angelegt wird.

5. Verfahren zum Füllen eines aus wenigstens einer Hohlprofilleiste gebildeten Abstandhalterrahmens für Isolierglasscheiben mit granulatförmigem Trockenmittel, wobei der Abstandhalterrahmen drei, vorzugsweise durch Biegen gebildete, Ecken aufweist und an der vierten Ecke offen ist, wobei granulatförmiges Trockenmittel über die offenen Enden in einen oder beide zu dieser offenen Ecke führenden Rahmenschenkel eingefüllt und dann der Rahmen geschlossen wird, wobei der eine Rahmenschenkel länger ist als der andere und der verlängerte Rahmenschenkel bis unterhalb seiner Biegestelle und der verkürzte Rahmenschenkel teilweise gefüllt werden, dadurch gekennzeichnet, daß das Verfahren nach einem oder mehreren der Ansprüche 1 bis 4 angewendet wird, und daß der Rahmen nach dem Füllvorgang und nach dem Umbiegen des längeren Rahmenschenkels an der Biegestelle durch einen Geradverbinder oder durch Verschweißen oder Verlöten der offenen Enden geschlossen wird.

6. Vorrichtung zum Durchführen des Verfahrens nach einem der Ansprüche 1 bis 4, mit einem Vorratsbehälter (10) für Granulat und einer Halterung (6, 7) für den zu füllenden Hohlkörper (1), dadurch gekennzeichnet, daß wenigstens eine in den zu füllenden Hohlkörper (1) einführbare Sonde (20, 21) vorgesehen ist, daß die Sonde (20, 21) über eine Leitung (11, 12) mit dem Vorratsbehälter (10) für Granulat in Verbindung steht, daß der Leitung (11, 12) oder der Sonde (20, 21) ein Sensor (26, 27) zum Überwachen von Bewegungen des Granulats zugeordnet ist und daß an die Sonde (20, 21) im Abstand von ihrem freien Ende eine Leitung (40, 41) zum Anlegen von Unterdruck angeschlossen ist.

7. Vorrichtung nach Anspruch 6, dadurch gekennzeichnet, daß neben der Sonde (20, 21) ein verstellbarer Tiefenanschlag (50) zum Begrenzen der Einführtiefe der Sonde (20, 21) in den Hohlkörper (1) vorgesehen ist.

8. Vorrichtung nach Anspruch 6, dadurch gekennzeichnet, daß die Sonde (20, 21) an einer Halterung (25, 25') gehalten ist, die beim Einführen der Sonde (20, 21) in den Hohlkörper (1) durch dessen offenes Ende (29) um eine vorwählbare Strecke (X) verschiebbar ist.

9. Vorrichtung nach einem der Ansprüche 6 bis 8, dadurch gekennzeichnet, daß an der Anschlußstelle der Leitung (40, 41) für Unterdruck an der Wandung der Sonde (20, 21) ein luftdurchlässiger, jedoch granulatundurchlässiger Wandteil (44), beispielsweise ein Sieb od.dgl. vorgesehen ist.

10. Vorrichtung nach einem der Ansprüche 6 bis 9, zum Durchführen des Verfahrens nach Anspruch 5, dadurch gekennzeichnet, daß eine Halterung (6, 7) zum Festlegen der zur noch offenen Ecke führenden Rahmenschenkel (2, 3) vorgesehen ist, und daß zwei Sonden (20, 21) vorgesehen sind, die in die offenen Enden der Rahmenschenkel (2, 3) einführbar sind.

11. Vorrichtung nach Anspruch 10, dadurch gekennzeichnet, daß die Sonden (20, 21) an einem gemeinsamen Träger (25) montiert sind.

12. Vorrichtung nach Anspruch 10, dadurch gekennzeichnet, daß die Sonden (20, 21) an unabhängig voneinander bewegbaren Halterungen (25, 25') montiert sind, die am Maschinengestell so geführt sind, daß die unterschiedlich weit in die offenen Rahmenschenkel (2, 3) einführbar sind.

13. Vorrichtung nach einem der Ansprüche 6 bis 12, dadurch gekennzeichnet, daß eine Steuerung (30) vorgesehen ist, der von dem der wenigstens einen Leitung (11, 12) oder Sonde (20, 21) zugeordneten Sensor (26, 27) ein Signal zugeführt wird, sobald der Sensor eine Unterbrechung der Bewegung von Granulat in der Leitung (11, 12) oder in der Sonde (20, 21) erfaßt, daß die Steuerung (30) ein Signal abgibt, das Schließen des Absperrorganes (13, 14) in der Leitung (11, 12) zwischen Sonde (20, 21) und Vorratsbehälter (10) für Granulat auslöst, und daß die Steuerung (30) das Herausziehen der Sonde (20, 21) und gleichzeitig das Beaufschlagen der Sonde (20, 21) mit Unterdruck bewirkt.

## Claims

1. A method of partially filling hollow bodies with granulate, characterized in that a probe connected to a supply container for granulate is inserted into the hollow body so far that its leading end is disposed at the place in the hollow body up to which the latter is to be filled with granulate, in that the feeding of granulate is broken off as soon as the hollow body has been filled with granulate up to the leading end of the probe, and in that the probe is then withdrawn from the hollow body.

2. A method according to claim 1, characterized in that the movement of granulate into the probe is monitored and the filling operation is broken off as soon as the movement of granulate in the probe stops.

3. A method according to claim 2, characterized in that the movement of granulate is monitored by a movement sensor.

4. A method according to any of claims 1 to 3, characterized in that the outflow of granulate from the probe is prevented during its withdrawal from the hollow body, in that a vacuum is applied to the probe at a distance from the free end thereof.

5. A method of filling a spacer frame for insulating glass formed from at least one hollow profiled strip with granular desiccant, wherein the spacer frame has three corners, preferably formed by bending and is open at the fourth corner, wherein granular desiccant is filled through the open ends into one or both of the sides of the frame leading to this open corner and the frame is then closed, wherein the one frame side is longer than the other and the lengthened frame side is filled up to below its bending site and the shortened frame arm is partially filled, characterized in that the method according to one or more of claims 1 to 4 is employed and in that the frame is closed, after the filling operation and after bending the longer frame side at the bending site, by a straight connector or by welding or soldering the open ends.

6. Apparatus for carrying out the method according to any of claims 1 to 4, with a supply container (10) for granulate and a holder (6, 7) for the hollow body (1) to be filled, characterized in that at least one probe (20, 21) is provided which can be introduced into the hollow body (1) to be filled, in that the probe (20, 21) is connected to the supply container (10) for granulate through a line (11, 12), in that a sensor (26, 27) for monitoring movements of the granulate is associated with the line (11, 12) or the probe (20, 21), and in that a line (40, 41) for applying a vacuum is connected to the probe (20, 21) at a distance from its free end.

7. Apparatus according to claim 6, characterized in that an adjustable depth stop (50) is provided in addition to the probe (20, 21) to limit the depth of insertion of the probe (20, 21) into the hollow body (1).

8. Apparatus according to claim 6, characterized in that the probe (20, 21) is retained on a holder (25, 25') which can be displaced through a pre-selectable path (X) when introducing the probe (20, 21) into the hollow body (1) through the open end (29) thereof.

9. Apparatus according to any of claims 6 to 8, characterized in that a wall part (44) which is permeable to air but impermeable to granulate, for example a sieve or the like, is provided at the point of attachment of the line (40, 41) for the vacuum to the wall of the probe (20, 21).

10. Apparatus according to any of claims 6 to 9, for carrying out the method according to claim 5, characterized in that a holder (6, 7) is provided for fixing the frame sides (2, 3) leading to the still open corner, and in that two probes (20, 21) are provided, which can be introduced into the open ends of the frame sides (2, 3).

11. Apparatus according to claim 10, characterized in that the probes (20, 21) are mounted on a common support (25).

12. Apparatus according to claim 10, characterized in that the probes (20, 21) are mounted on holders (25, 25') which can be moved independently of one another and which are so guided on the machine frame that they can be introduced to different extents into the open frame sides (2, 3).

13. Apparatus according to any of claims 6 to 12, characterized in that a controller (30) is provided, to which is fed a signal from the sensor (26, 27) associated with the at least one line (11, 12) or probe (20, 21) as soon as the sensor detects an interruption in the movement of the granulate in the line (11, 12) or in the probe (20, 21), in that the controller (30) issues a' signal which triggers closure of the shut-off member (13, 14) in the line (11, 12) between probe (20, 21) and supply container (10) for granulate, and in that the controller (30) effects withdrawal of the probe (20, 21) and simultaneously subjects the probe (20, 21) to vacuum.

## Revendications

1. Procédé pour remplir partiellement des éléments creux au moyen d'un produit en granulés, caractérisé par le fait que l'on introduit une sonde connectée à un réservoir de stockage du produit en granulés dans l'élément creux, jusqu'à ce que l'extrémité antérieure de la sonde atteigne le point à l'intérieur de l'élément creux juqu'où le produit en granulés doit remplir ledit élément creux, par le fait que l'on arrête l'introduction de produit en granulés dès que l'élément creux est rempli jusqu'au niveau de l'extrémité antérieure de la sonde et par le fait que l'on retire ensuite la sonde de l'élément creux.

2. Procédé selon la revendication 1, caractérisé par le fait que l'on surveille le mouvement du produit en granulés à l'intérieur de la sonde et que l'on interrompt le processus de remplissage dès que le mouvement du produit en granulés à l'intérieur de la sonde s'arrête.

3. Procédé selon la revendication 2, caractérisé par le fait que l'on surveille le mouvement du produit en granulés au moyen d'un détecteur de mouvement.

4. Procédé selon l'une des revendications 1 à 3, caractérisé par le fait que l'on interrompt l'écoulement du produit en granulés à travers la sonde lors de son retrait de l'élément creux en appliquant une pression négative à la sonde, à une certaine distance de l'extrémité libre de celle-ci.

5. Procédé pour remplir de produit déshydratant en granulés un cadre intercalaire de vitrage isolant formé d'au moins une baguette profilée creuse, le cadre intercalaire comportant trois angles, de préférence formés par pliage, et étant ouvert an niveau du quatrième angle, le produit déshydratant en granulés étant introduit par les extrémités ouvertes dans une aile ou dans les deux ailes du cadre arrivant audit angle ouvert et le cadre étant ensuite fermé, l'une des ailes du cadre intercalaire étant plus longue que l'autre et l'aile plus longue étant remplie jusqu'en dessous de son point de pliage et l'aile plus courte n'étant que partiellement remplie, caractérisé par le fait que l'on applique le procédé selon une ou plusieurs des revendications 1 à 4 et par le fait qu'après remplissage et pliage de l'aile de cadre plus longue au niveau du point de pliage, on ferme le cadre au moyen d'un élément de jonction droit ou par soudage ou par collage des extrémités ouvertes.

6. Dispositif pour la mise en oeuvre du procédé selon l'une des revendications 1 à 4, comportant une réservoir (10) de stockage pour le produit en granulés et un dispositif de fixation pour l'élément creux (1) à remplir, caractérisé par le fait qu'il est prévu au moins une sonde (20,21) qui peut être introduite dans l'élément creux (1) à remplir, par le fait que la sonde (20,21) est connectée au réservoir (10) de stockage pour le produit en granulés par une conduite (11,12), par le fait qu'un détecteur (26,27) pour surveiller le mouvement du produit en granulés est associé à la conduite (11,12) ou à la sonde (20,21) et par le fait qu'une conduite (40,41) permettant d'appliquer une pression négative est connectée à la sonde (20,21), à une certaine distance de l'extrémité libre de celle-ci.

7. Dispositif selon la revendication 6, caractérisé par le fait qu'il est prévu à côté de la sonde (20,21), une butée de profondeur (50) réglable pour limiter la profondeur d'introduction de la sonde (20,21) dans l'élément creux (1).

8. Dispositif selon la revendication 6, caractérisé par le fait que la sonde (20,21) est fixée sur un support (25,25') qui, lors de l'introduction de la sonde (20,21) dans l'élément creux (1), peut coulisser d'une course (X) prédéterminable à travers l'extrémité ouverte (29) dudit élément creux.

9. Dispositif selon l'une des revendications 6 à 8, caractérisé par le fait qu'il est prévu au point de connexion de la conduite (40,41) de la pression négative, dans la paroi de la sonde (20,21), une partie de paroi (44) perméable à l'air qui ne laisse pas passer le produit en granulés, par exemple un tamis ou similaire.

10. Dispositif selon l'une des revendications 6 à 9 pour la mise en oeuvre du procédé selon la revendication 5, caractérisé par le fait qu'il est prévu un support (6,7) pour fixer les ailes (2,3) du cadre intercalaire menant à l'angle encore ouvert et par le fait qu'il est prévu deux sondes (20,21) qui peuvent être introduites dans les extrémités ouvertes des ailes (2,3) du cadre intercalaire.

11. Dispositif selon la revendication 10, caractérisé par le fait que les sondes (20,21) sont montées dans uns support (25) commun.

12. Dispositif selon la revendication 10, caractérisé par le fait que les sondes (20,21) sont montées dans des supports (25,25') qui peuvent se déplacer indépendamment l'un de l'autre et qui sont guidés sur le bâti de la machine de manière à pouvoir être introduites à des profondeurs différentes dans les ailes (2,3) ouvertes du cadre intercalaire.

13. Dispositif selon l'une des revendications 6 à 12, caractérisé par le fait qu'il est prévu une commande (30) à laquelle est envoyé un signal provenant du détecteur (26,27) associé à la conduite (11,12) ou à la sonde (20,21), au nombre d'au moins une, dès que le détecteur détecte un arrêt du mouvement du produit en granulés à l'intérieur de ladite conduite (11,12) ou de ladite sonde (20,21), par le fait que la commande (30) délivre un signal qui déclenche la fermeture d'un organe de coupure (13,14) dans la conduite (11,12) entre la sonde (20,21) et le réservoir (10) de stockage du produit en granulés et par le fait que la commande (30) provoque le retrait de la sonde (20,21) et simultanément l'application d'une pression négative dans la sonde (20,21).
